**Europäisches Patentamt**

**European Patent Office**

**Office européen des brevets**

(19)

(11) Veröffentlichungsnummer : **0 318 456 B1**

# EUROPÄISCHE PATENTSCHRIFT

(12)

(45) Veröffentlichungstag der Patentschrift :
**27.03.91 Patentblatt 91/13**

(51) Int. Cl.$^5$ : **B60K 23/08**

(21) Anmeldenummer : **88890283.0**

(22) Anmeldetag : **11.11.88**

(54) **Kraftfahrzeug mit zwei getriebenen Achsen.**

(30) Priorität : **23.11.87 AT 3072/87**

(43) Veröffentlichungstag der Anmeldung :
**31.05.89 Patentblatt 89/22**

(45) Bekanntmachung des Hinweises auf die
Patenterteilung :
**27.03.91 Patentblatt 91/13**

(84) Benannte Vertragsstaaten :
**DE FR GB IT SE**

(56) Entgegenhaltungen :
**EP-A- 0 213 654**

(56) Entgegenhaltungen :
**EP-A- 0 216 318**
**EP-A- 0 217 087**
**DE-A- 3 403 883**
**DE-C- 3 317 247**
**GB-A- 2 146 961**
**US-A- 4 280 583**

(73) Patentinhaber : **STEYR-DAIMLER-PUCH**
**AKTIENGESELLSCHAFT**
**Franz-Josefs-Kai 51**
**A-1010 Wien (AT)**

(72) Erfinder : **Sommer, Hans Dieter, Dipl.-Ing.**
**Auersperggasse 8**
**A-8010 Graz (AT)**

EP 0 318 456 B1

## Beschreibung

Die Erfindung bezieht sich auf ein Kraftahrzeug mit zwei getriebenen Achsen, von denen eine mittels einer über eine Hilfseinrichtung beim Bremsen selbständig betätigbaren Trennkupplung vom Antrieb abschaltbar ist.

Kraftfahrzeuge mit einer ständig angetriebenen Achse und einer mittels einer Hilfseinrichtung willkürlich zuschaltbaren Triebachse sind vielfach bekannt. Nachteilig ist dabei jedoch, daß es bei Bremsmanövern während des Allradantriebes insbesondere dann zu einem unstabilen Fahrverhalten kommen kann, wenn die Räder der beiden Fahrzeugseiten auf Bahnen mit unterschiedlichen Reibbeiwerten rollen. Dieses ungünstige Fahrverhalten ist darauf zurückzuführen, daß sich durch die Koppelung der beiden Achsen eine von der vorgeschriebenen Bremskraftverteilung abweichende Aufteilung der Bremskraft auf die Räder der beiden Achsen ergibt. Selbstverständlich treten solche Stabilitätsverluste vor allem dann auf, wenn im Allradbetrieb bei höherer Fahrgeschwindigkeit stark bzw. plötzlich gebremst wird.

Es ist auch schon bekannt (DE-A-33 17 247), beide Achsen anzutreiben, eine Achse aber mittels einer über eine Hilfseinrichtung beim Bremsen selbständig betätigbare Trennkupplung vom Antrieb abzuschalten. Dabei ist als Trennkupplung ein Freilauf vorgesehen, der jedoch verschiedene Nachteile mit sich bringt. Da sich der Freilauf beim Schubbetrieb löst, also die eine Achse vom Antrieb abschaltet, steht dann zum Bremsen über das Motorschleppmoment nur eine Achse zur Verfügung. Soll die Rückwärtsfahrt mit beiden getriebenen Achsen erfolgen, so muß der Freilauf überbrückt werden. Außerdem weist ein solcher Freilauf eine vergleichsweise komplizierte Bauweise auf, die sich insbesondere auch durch die Notwendigkeit seiner Überbruckung bei Rückwärtsfahrt mit beiden getriebenen Achsen ergibt.

Somit liegt der Erfindung die Aufgabe zugrunde, diese Mängel zu beseitigen und das eingangs geschilderte Kraftfahrzeug so zu verbessern, daß sich eine wesentliche Verringerung des technischen Aufwandes ohne Verminderung der Sicherheit des Fahrverhaltens ergibt.

Die Erfindung löst die gestellte Aufgabe dadurch, daß die Trennkupplung als formschlüssige Kupplung ausgebildet und mittels der Hilfseinrichtung bei mit einer vorbestimmten Mindestdrehzahl laufendem Motor nach dem Lösen der Kupplung durch einen vorangegangenen Bremsvorgang bei Freigabe des Bremspedals oder durch Betätigung des Fahrfußhebels wieder selbständig einrückbar ist.

Es wird also der bisherige Freilauf durch eine wesentlich einfachere und leicht zu betätigende formschlüssige Kupplung ersetzt, wobei aber der Fahrer nach dem Lösen der Kupplung, diese nicht wieder durch Betätigung eines Schalters oder Handhebels od.dgl. einrücken muß, sondern nur das Bremspedal freizugeben oder den Fahrfußhebel zu betätigen braucht, welche Vorgänge beim Fahrbetrieb naturgemäß ohnehin durchgeführt werden müssen. Dabei hat es sich bei praktischen Versuchen überraschenderweise ergeben, daß sich die formschlüssige Trennkupplung, also beispielsweise eine Klauenkupplung mit Schiebemuffe, ohne Schwierigkeiten ein- und ausrücken läßt, also keinesfalls eine kraftschlüssige Kupplung, die den technischen Aufwand wesentlich erhöhen wurde, erforderlich ist.

In weiterer Ausbildung der Erfindung ist die Trennkupplung mittels der Hilfseinrichtung nur bei Überschreiten einer vorbestimmten Mindestfahrgeschwindigkeit lösbar. Es wird also nur dann vom Antrieb beider Achsen durch Lösen der Trennkupplung abgegangen, wenn die Fahrgeschwindikeit so hoch ist, daß die Gefahr eines unstabilen Fahrverhaltens beim Bremsvorgang besteht, was einerseits zur Schonung der Kupplung beiträgt und anderseits einen Abschaltruck beim Befahren enger Kurven verhindert.

In der Zeichnung ist der Erfindungsgegenstand in einem Ausführungsbeispiel dargestellt, und zwar zeigen

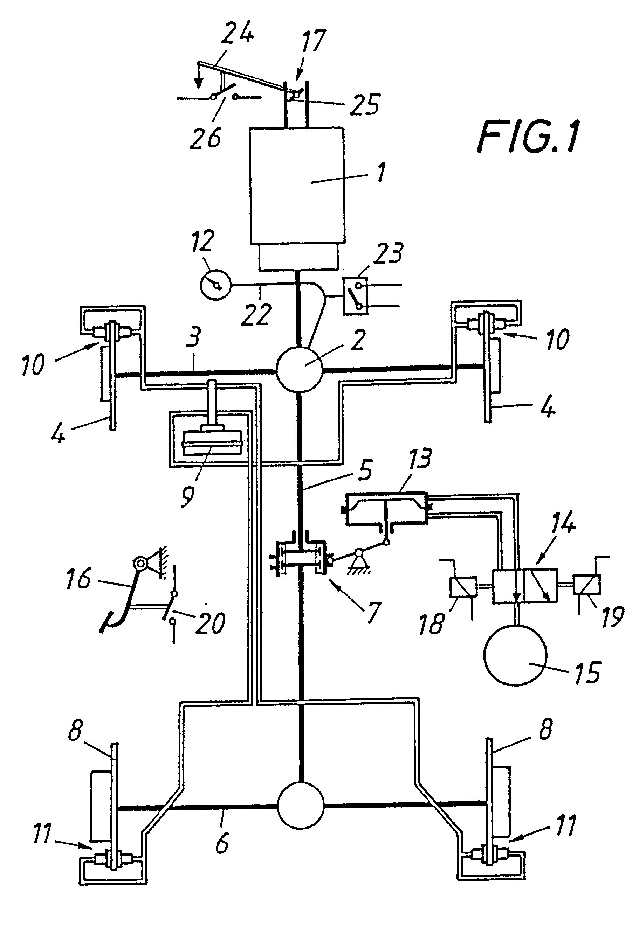

Fig. 1 die erfindungswesentlichen Teile eines Kraftfahrzeuges mit zwei getriebenen Achsen im Schema und

Fig. 2 das Schaltschema der zugehörigen elektrischen Hifseinrichtung.

Vom Motor 1 wird über ein Ausgleichgetriebe 2 die Vorderachse 3 angetrieben, wobei von den Vorderrädern nur die Bremsscheiben 4 dargestellt sind. Im Antriebsstrang 5, der zur Hinterachse 6 führt, ist eine mechanische, als formschlüssige Kupplung ausgebildete Trennkupplung 7 eingebaut, wobei auch die Hinterräder nur durch die Bremsscheiben 8 angedeutet sind. Vom Bremsdruckgeber 9 führen entsprechende Leitungen zu den Vorderradbremsen 10 einerseits und den Hinterradbremsen 11 anderseits. Mit 12 ist der vom Ausgleichgetriebe 2 der Vorderachse 3 angetriebene Tachometer bezeichnet. Die Trennkupplung 7 ist mit Hilfe einer Unterdruckschaltdose 13 betätigbar, die über ein Ventil 14 an einen Unterdruckspeicher 15 angeschlossen ist. Mit 16 sind das Bremspedal und mit 17 der Vergaser des Motors 1 bezeichnet. In der dargestellten Stellung ist der Antriebsstrang 5 zur Hinterachse 6 nicht unterbrochen, weil die Trennkupplung 7 eingedrückt ist.

Für die Betätigung des Ventiles 14 dienen zwei Arbeitsmagnete 18, 19, von denen der Magnet 18 das Ausrücken und der Magnet 19 das Einrücken der Trennkupplung 7 steuert.

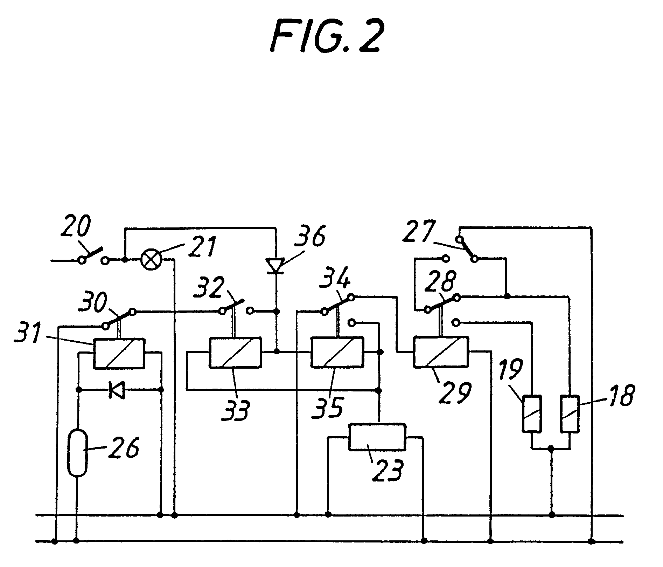

Durch Betätigung des Bremspedales 16 wird ein Schalter 20 geschlossen, der auch, wie in Fig. 2 dargestellt, der übliche Schalter für das Bremslicht 21 sein kann. Ferner ist auf der Tachometerwelle 22 eine Schalteinrichtung 23 vorgesehen, die dann, wenn die Fahrgeschwindigkeit v größer ist, als ein vorgewählter Wert $v_0$ einen Masseanschluß herstellt, der durch Halteeinrichtungen auch während des Bremsvorganges aufrechterhalten wird.

Mit einem Fahrfußhebel 24 bzw. dem vom Fahrfußhebel 24 zur Vergaserklappe 25 führenden Gasseilzug ist ein z. B. als Reedrelais ausgebildeter Schalter 26 verbunden, der bei Betätigung des Fahrfußhebels 24 schließt.

Die Hilfseinrichtung ist gemäß Fig. 2 wie folgt aufgebaut :

Für das Ein- und Abschalten des Allradantriebes dient ein Handschalter 27, der in seiner Stellung "Aus" den Arbeitsmagneten 18 einschaltet, soferne der Zundstromkreis geschlossen ist. In der Stellung "Ein" verbindet der Schalter 27 den Zündstromkreis mit einem Umschaltekontakt 28 eines Relais 29, das in einem von Kontakten 30, 32, 34 von Relais 31, 33, 35 geschalteten Steuerstromkreis liegt. Beim Einschalten der Zündung und auf "Ein" geschaltetem Schalter 27 zieht das Relais 29 an und schaltet dadurch den Magneten 19 ein, so daß die Kupplung 7 eingerückt wird oder eingerückt bleibt.

Das Relais 31 ist dem Kontakt 26 zugeordnet und hält daher seinen Kontakt 30 geschlossen, wenn der Fahrfußhebel 17 betätigt ist. Wird das Bremspedal 16 betätigt, so schließt der Kontakt 20. Ist in diesem Zustand die Fahrgeschwindigkeit v größer als $v_0$, so liegen die Relais 33, 35 mit dem einen Windungsende über die Schalteinrichtung 23 an Masse und erhalten durch das Schließen des Schalters 20 über eine Sperrdiode 36 Strom, so daß beide Relais 33 und 35 anziehen und durch den Umschaltekontakt 34 des Relais 35 über 23 auch bei Absinken der Geschwindigkeit unter die Größe $v_0$ an Masse gehalten werden. Durch die Betätigung des Umschalters 34 wird das Relais 29 stromlos und schaltet daher in die dargestellte Schaltstellung um, durch die der Ausschaltmagnet 18 eingeschaltet und damit die Kupplung 7 ausgerückt wird.

Wird nun das Fahrpedal 24 betätigt und damit der Schalter 26 geschlossen, so zieht das Relais 31 an, wodurch (der Schalter 20 hat wieder geöffnet) die bis dahin über den Kontakt 30 gehaltenen Relais 30 und 35 stromlos werden, so daß der Ursprungszustand wieder hergestellt ist und das Relais 29 im Sinne des Einschaltens des Magneten 19 anzieht, so daß der Vierradantrieb wieder eingeschaltet ist.

## Ansprüche

1. Kraftfahrzeug mit zwei getriebenen Achsen (3, 6), von denen eine (6) mittels einer über eine Hilfseinrichtung 13 bis 15 beim Bremsen selbständing betätigbaren Trennkupplung (7) vom Antrieb abschaltbar ist, dadurch gekennzeichnet, daß die Trennkupplung als formschlüssige Kupplung (7) ausgebildet und mittels der Hilfseinrichtung (Fig. 2) bei mit einer vorbestimmten Mindestdrehzahl laufendem Motor (1) nach dem Lösen der Kupplung (7) durch einen vorangegangenen Bremsvorgang bei Freigabe des Bremspedals (16) oder durch Betätigung des Fahrfußhebels (24) wieder selbständig einrückbar ist.

2. Kraftfahrzeug nach Anspruch 1, dadurch gekennzeichnet, daß die Trennkupplung (7) mittels der Hilfseinrichtung (Fig. 2) nur bei Überschreiten einer vorbestimmten Mindestfahrgeschwindigkeit lösbar ist.

## Claims

1. A motor vehicle comprising two driven axles (3, 6), one (6) of which is adapted to be disconnected from the drive by a clutch coupling (7), which is adapted to be automatically actuated by auxiliary means (13 to 15) during a braking operation, characterized in that the clutch coupling consists of a positive coupling (7) and is automatically reengageable by the auxiliary means (Figure 2) upon a release of the brake pedal (16) or upon an actuation of the accelerator pedal (24) when the motor (1) is operating at a predetermined minimum speed after the coupling (7) has been disengaged by a preceding braking operation.

2. A motor vehicle according to claim 1, characterized in that the clutch coupling (7) is disengageable by means of the auxiliary means (Figure 2) only when a predetermined minimum speed of travel is exceeded.

## Revendications

1. Véhicule automobile à deux essieux moteurs (3, 6) dont l'un (6) peut être désaccouplé de la transmission au moyen d'un embrayage de coupure (7) commandé automatiquement par l'intermédiaire d'un dispositif auxiliaire (13 à 15) lors du freinage, caractérisé en ce que l'embrayage de coupure est constitué par un embrayage à encastrement de formes (7) et il peut être mis à nouveau en état d'accouplement automatiquement au moyen du dispositif auxiliaire (figure 2) lorsque le moteur tourne à une vitesse de rotation minimale prédéfinie après l'ouverture de cet embrayage (7) par suite d'une opération précédente de freinage, du fait du relâchement de la pédale de freinage (16) ou de la manoeuvre de la pédale d'accélération (24).

2. Véhicule automobile selon la revendication 1 caractérisé en ce que l'embrayage de coupure (7) peut être ouvert au moyen du dispositif auxiliaire (figure 2) seulement à la suite du dépassement d'une vitesse de circulation minimale prédéfinie.

FIG.1

# FIG. 2